# EUROPEAN PATENT APPLICATION

(11) **EP 0 635 530 A1**
(43) Date of publication of application: **25.01.1995**
(21) Application number: 94305286.0
(22) Date of filing: 19.07.1994
(51) Int. Cl.: C08G 18/40, C08G 18/62

(54) **Vinyl chloride resin compositions, moulded products obtained therefrom, and methods of producing the compositions and molded products**

(30) Priority: 21.07.1993 JP 201063/93
(71) Applicant: Chisso Corporation, Osaka-shi Osaka-fu (JP)
(72) Inventor: Ito, Yuichi, Ichihara-shi, Chiba-ken (JP); Karasawa, Yuji, Yachiyo-shi, Chiba-ken (JP); Chiku, Shinki, Ichihara-shi, Chiba-ken (JP)
(74) Representative: Lamb, John Baxter

(57) **Abstract**

A vinyl chloride resin composition comprises
(a) 100 parts by weight of a crosslinkable vinyl chloride resin, or 100 parts by weight in total of 1 to 99 parts by weight of a crosslinkable vinyl chloride resin and 99 to 1 part by weight of a vinyl chloride resin;
(b) 1 to 100 parts by weight of a polyol compound; and
(c) as a crosslinking agent, 1 to 100 parts by weight of a blocked polyisocyanate compound.

## Description

The present invention relates to vinyl chloride resin compositions having excellent tensile strength and processability with remarkably improved compression set and a method of producing the compositions. The present invention also relates to molded products obtained from the compositions and a method of producing the products.

Soft vinyl chloride resins are materials which are well-balanced with respect to processability, physical properties and price. Moreover, they can be processed into products having a rubber-like texture. For these reasons, these resins have been widely used in a variety of fields including automobiles, machinery, electric appliances, medicines and buildings. However, they have extremely high compression set as compared with vulcanized rubber, and therefore, they have poor recovery from deformation caused by external force. Due to this drawback, the use of these resins has been limited.

Conventional approaches to overcome the above-described shortcoming include a method in which a vinyl chloride resin having a high polymerization degree is blended, or a method in which a partially-crosslinked vinyl chloride resin is blended. However, these methods provide only limited improvements, and products obtained by either of these methods still have high compression set, which requires further improvement.

According to another known method, a crosslinked rubber-like material is incorporated into a partially-crosslinked vinyl chloride resin. A product obtained by this method has a compression set comparable to that of vulcanized rubber when the proportion of the rubber component is high. However, as the proportion of the vinyl chloride resin component becomes higher, the compression set of the product becomes worse. It is therefore necessary to use a large amount of rubber component in order to impart compression set comparable to that of vulcanized rubber. As a result, the production cost is inevitably increased, and the excellent properties inherent to vinyl chloride resins, such as high weather resistance and good surface properties of the products, are impaired.

There is also a method in which a polyisocyanate compound is incorporated into a vinyl chloride resin having a reactive group. Japanese Patent Publication (kokoku) No. 52-32900 discloses a method of improving compression set, in which a crosslinked molded product is obtained by incorporating a polyisocyanate compound serving as a crosslinking agent into a vinyl chloride polymer which is obtained by emulsion polymerization and which has a hydroxyl or carboxyl group in the molecule. However, when the vinyl chloride resin and the polyisocyanate compound are crosslinked with each other by this method, the resulting product has remarkably enhanced hardness and reduced flexibility. Thus, only brittle and rigid products are obtained by this method. In addition, according to this method, although a polymer obtained by emulsion polymerization can be successfully processed by a coater, the type of molding and its use are limited. That is, an ordinary molding process such as extrusion or injection molding in which kneading is carried out at elevated temperatures only produces products having a rough surface. Thus, this method is limited with respect to molding method and end uses of the resulting products.

Japanese Patent Application Laid-open (kokai) Nos. 1-185313 and 1-254725 disclose polyvinyl chloride-polyurethane composite materials which are obtained by a urethanization reaction between a polyol-containing vinyl chloride polymer and a polyisocyanate compound. Although the polyvinyl chloride and the polyurethane can be uniformly dispersed, crosslinking between the two compounds occurs only partially. In other words, the co-crosslinked structure formed between the polyvinyl chloride and the polyurethane occupies a relatively small proportion. This method is therefore not so effective in improving compression set.

Japanese Patent Application (Laid-open) No. 58-83039 discloses a method in which a polyol compound and a polyisocyanate compound are impregnated in a polyvinyl chloride resin to form polyurethane in the polyvinyl chloride. However, the extent of the co-crosslinked structure formed between the polyvinyl chloride and the polyurethane is small, as in the case of the above-described method. This method is thus not effective in improving compression set.

Japanese Patent Application (Laid-open) No. 5-65383 discloses a vinyl chloride resin composition which is obtained by incorporating a polyol compound and a crosslinking agent into a resin mixture of a crosslinkable vinyl chloride resin and a vinyl chloride resin. This composition has improved compression set and resistance to thermal deformation. However, the crosslinking agent incorporated into the composition is highly reactive, like a polyisocyanate compound, so a crosslinking reaction between the crosslinkable vinyl chloride and the polyol compound proceeds easily. Therefore, during a process in which a crosslinkable vinyl chloride resin or a vinyl chloride resin are made to absorb a polyol compound, a crosslinking agent, a plasticizer and the like by mixing them while heating to give a dry powdery resin composition (hereinafter the process is referred to as "drying up"), and also during tentative preservation of the resin composition, a crosslinking reaction proceeds to impair the moldability of the composition and to roughen the surface of a molded product obtained. In addition, a co-crosslinked structure cannot be uniformly formed, resulting in low strength of the product.

### SUMMARY OF THE INVENTION

Accordingly, it is an object of the present invention to overcome the above-described drawbacks in the prior art and to provide a vinyl chloride resin composition which is excellent with regard to compression set, tensile strength, and processability.

It is another object of the present invention to provide a method of producing the vinyl chloride resin composition.

It is a further object of the present invention to provide a molded product from the resin composition.

It is a still further object of the present invention to provide a method of producing the molded product.

The present inventors have made careful studies in order to improve the compression set and tensile strength of molded products obtained from vinyl chloride resin compositions. As a result, it has been found that these properties can be remarkably improved by incorporating a polyol compound and a blocked polyisocyanate compound into a crosslinkable vinyl chloride resin.

Further, the present inventors have also made extensive studies in order to improve the processability of vinyl chloride resin compositions. As a result, the following has been found. When a blocked polyisocyanate compound is used as a crosslinking agent, it becomes possible to carry out, without causing a crosslinking reaction, a drying up process at a temperature lower than the dissociation temperature of a blocking agent. Therefore, a vinyl chloride resin composition in which crosslinking reaction proceeds only when the composition is granulated or molded can be obtained. The above-mentioned properties can thus be remarkably improved. Also, a product obtained from such a resin composition has an excellent appearance. The present invention has been accomplished on the basis of the above findings.

According to a first aspect of the present invention, there is provided a vinyl chloride resin composition comprising:
(a) 100 parts by weight of a crosslinkable vinyl chloride resin, or 100 parts by weight in total of 1 to 99 parts by weight of a crosslinkable vinyl chloride resin and 99 to 1 part by weight of a vinyl chloride resin,
(b) 1 to 100 parts by weight of a polyol compound, and
(c) as a crosslinking agent, 1 to 100 parts by weight of a blocked polyisocyanate compound.

According to a second aspect of the present invention, there is provided a method of producing the above-described vinyl chloride resin composition, comprising a drying-up step in which the components are mixed while heating them to a temperature lower than the dissociation temperature of the blocked polyisocyanate compound.

According to a third aspect of the present invention, there is provided a molded product obtained from the vinyl chloride resin composition prepared by the above method.

According to a fourth aspect of the present invention, there is provided a method of producing the molded product described above, comprising a step of molding the vinyl chloride resin composition while heating the composition to the dissociation temperature of the blocked polyisocyanate compound or higher.

The above and other objects, features and advantages of the present invention will become apparent from the following description.

### DESCRIPTION OF THE PREFERRED EMBODIMENTS

The crosslinkable vinyl chloride resin for use in the present invention is preferably a vinyl chloride resin containing a reactive group which is obtained by copolymerizing 99.98 to 50 mol% of a vinyl chloride monomer with 0.02 to 50 mol% of an unsaturated monomer having active hydrogen (hereinafter referred to as a reactive comonomer) by suspension polymerization. It preferably has a polymerization degree of 300 to 5000.

Specific examples of the reactive comonomer which is a component of the crosslinkable vinyl chloride resin are as follows:
(a) unsaturated monomers having a carboxyl group including unsaturated monocarboxylic acids such as acrylic acid, methacrylic acid, crotonic acid and cinnamic acid; unsaturated dicarboxylic acids such as maleic acid, fumaric acid, itaconic acid and citraconic acid; and monoesters of unsaturated dicarboxylic acid such as monomethyl maleate and monoethyl maleate;
(b) unsaturated monomers having a hydroxyl group including acrylates and methacrylates such as hydroxyethyl acrylate, hydroxypropyl acrylate, hydroxyethyl methacrylate and hydroxypropyl methacrylate; vinyl ethers such as vinyl-4-hydroxybutyl ether; vinyl esters such as vinyl 12-hydroxy-stearate; and allyl compounds such as allylalcohol, o-allyl-phenol and glycerol allyl ether; and
(c) unsaturated monomers having an amino group including acrylamide, N-methylolacrylamide and diacetone acrylamide.

The mean polymerization degree of the crosslinkable vinyl chloride resin is preferably 300 to 5000, and more preferably 1000 to 4000. A vinyl chloride resin having a mean polymerization degree of less than 300 cannot be easily handled in the process of preparing the composition. On the other hand, when the degree is in excess of 5000, the moldability of the resulting composition is impaired.

The reactive comonomer content of the crosslinkable vinyl chloride resin is preferably 0.02 to 50 mol%, and more preferably 0.1 to 10 mol%. When this content is less than 0.02 mol%, the co-crosslinked structure formed in the resin is relatively minor, so the resulting product cannot have sufficiently improved compression set and tensile strength. On the other hand, when the reactive comonomer content is in excess of 50 mol%, the thermal stability of the resin is impaired.

In the manufacture of the crosslinkable vinyl chloride resin for use in the present invention, an unsaturated monomer which can be used for ordinary copolymerization with vinyl chloride can also be employed in addition to the vinyl chloride monomer and the reactive comonomer.

Examples of such an unsaturated monomer include alpha-olefins such as ethylene, propylene and butylene; vinyl esters such as vinyl acetate, vinyl propionate and vinyl stearate; vinyl ethers such as vinyl methyl ether, vinyl ethyl ether, vinyl isobutyl ether and vinyl phenyl ether; unsaturated carboxylic acids such as acrylic acid and methyl acrylate; vinylidenes such as vinylidene chloride and vinylidene fluoride; vinyl aryl compounds such as styrene, vinyltoluene, methoxystyrene, divinylbenzene, chlorostyrene, dichlorostyrene and alpha-vinylnaphthalene; and unsaturated nitriles such as acrylonitrile.

In the present invention, an ordinary vinyl chloride resin can be used together with the crosslinkable vinyl chloride resin. A vinyl chloride homopolymer or a copolymer of a vinyl chloride monomer with one or more of the above-described unsaturated monomers can be used singly or in combination as the vinyl chloride resin. By co-employing the vinyl chloride resin, the processability of the resulting composition can be improved. However, when the vinyl chloride resin content exceeds 99 parts by weight out of 100 parts by weight in total of the crosslinkable vinyl chloride resin and the vinyl chloride resin, the effect of the present invention, that is, the improvement in compression set is reduced.

The vinyl chloride resin for use in the present invention can be prepared by any known method for polymerizing a vinyl chloride resin, such as the suspension, emulsion, block or solution polymerization method.

The polyol compound which is incorporated into the crosslinkable vinyl chloride resin, or a mixture of the crosslinkable vinyl chloride resin and the vinyl chloride resin (hereinafter referred to as a resin component) is preferably a compound containing two or more hydroxyl groups on average per molecule. Examples of such a polyol compound are as follows:
(a) Polyols such as ethylene glycol, diethylene glycol, triethylene glycol, 1,2-propylene glycol, dipropylene glycol, trimethylene glycol, 1,4-butylene glycol, 1,3-butylene glycol, tetramethylene glycol, neopentyl glycol, hexamethylene glycol, decamethylene glycol, glycerin, trimethylolpropane, pentaerythritol and sorbitol;
(b) Polyether polyols obtained by addition polymerization conducted by adding one or more compounds selected from ethylene oxide, propylene oxide, butylene oxide, tetrahydrofuran and styrene oxide to one or more compounds selected from the polyols enumerated in paragraph (a) and those compounds which contain at least two active hydrogens on average per molecule, such as sucrose, aconitic acid, trimellitic acid, hemimellitic acid, ethylenediamine, propylenediamine, diethylenetriamine, triethanolamine, pyrogallol, dihydrobenzoic acid, hydroxyphthalic acid, resorcinol, hydroquinone, 2,2-bis(4'-hydroxyphenyl)propane, 4,4'-dihydroxyphenylmethane and 1,2-propanedithiol;
(c) Polyester polyols obtained by polycondensation between one or more of the polyols listed in paragraph (a) and one or more of those compounds which contain at least two carboxyl groups per molecule, such as malonic acid, maleic acid, succinic acid, adipic acid, tartaric acid, pimelic acid, sebacic acid, oxalic acid, phthalic acid, terephthalic acid, hexahydrophthalic acid, aconitic acid, trimellitic acid and hemimellitic acid;
(d) Acrylic polyols obtained by copolymerizing one or more acrylic monomers having active hydrogen selected from acrylic acid, methacrylic acid, maleic acid, itaconic acid, 2-hydroxymethyl acrylate, 2-hydroxymethyl methacrylate, 2-hydroxyethyl acrylate, 2-hydroxyethyl methacrylate, hydroxypropyl acrylate, hydroxypropyl methacrylate, acrylamide, N-methylolacrylamide and diacetone acrylamide with one or more vinyl compounds selected from methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, n-hexyl methacrylate, lauryl methacrylate, styrene, vinyl toluene, vinyl acetate and acrylonitrile; and
(e) Hydroxy-modified products of rubber-like materials such as polybutadiene, hydrogenated polybutadiene, polyisoprene, hydrogenated polyisoprene, NBR, EPR, EPDM, chloroprene, chlorosulfonated PE and chlorinated PE.

The amount of the polyol compound incorporated is preferably 1 to 100 parts by weight per 100 parts by weight of the resin component. When the amount of the polyol compound is less than 1 part by weight, the compression set of the resulting product becomes worse; when it is in excess of 100 parts by weight, the processability and productivity of the resulting composition are lowered.

A blocked polyisocyanate compound which is usually used for the production of polyurethane can be used as a crosslinking agent to be incorporated into the resin component. Examples of such a blocked polyisocyanate compound include polyisocyanate monomers, for examples, aliphatic diisocyanates such as hexamethylenediisocyanate and lysine diisocyanate, alicyclic diisocyanates such as hydrogenated diphenylmethane-diisocyanate, isophoronediisocyanate and hydrogenated tolylenediisocyanate, and aromatic diisocyanates such as tolylenediisocyanate, diphenylmethanediisocyanate, xylenediisocyanate and naphthalene-1,5-diisocyanate; polymers thereof; or urethane polymers obtained therefrom which are block-stabilized by a blocking agent selected from active methylene compounds, oximes, lactams, phenols, alkyl phenols and basic nitrogen-containing compounds. Each one of these compounds has its own dissociation temperature (some of them have a widely-ranged dissociation temperature). In general, a blocking agent is dissociated and a highly reactive isocyanate group appears when the compound is heated to its dissociation temperature.

The definition of the dissociation temperature is as follows.

A blocked polyisocyanate compound and a compound having a reactive group which can react with the isocyanate group of the polyisocyanate compound are mixed in a reaction ratio (a ratio between the reactive groups contained in the two compounds) of 1:1. The viscosity of the mixture is then adjusted to 15 seconds (by Ford Cup #4) by diluting it with a thinner. The diluted mixture is spray-coated onto a tinplate sheet and hardened by baking at a predetermined temperature for 30 minutes. The gel fraction of the film thus obtained is measured and plotted against the baking temperature. The temperature at which the gel fraction is 20 wt% is referred to as the dissociation temperature.

A mixture of two or more types of the above-described blocked polyisocyanate compounds can also be used as the blocked polyisocyanate compound. It is possible to use a mixture of several types of the block polyisocyanate compounds having different dissociation temperatures.

The amount of the blocked polyisocyanate compound incorporated is preferably 1 to 100 parts by weight per 100 parts by weight of the resin component. When this amount is less than 1 part by weight, the effect on improvement on compression set is decreased; when the amount is in excess of 100 parts by weight, the processability and productivity of the resulting composition are lowered.

In the present invention, the above-described excellent properties are imparted to the resin composition by crosslinking molecules of the crosslinkable vinyl chloride resin or the polyol compound with the blocked polyisocyanate compound, or crosslinking the crosslinkable vinyl chloride and the polyol compound with the blocked polyisocyanate compound.

When the vinyl chloride resin composition is melted and kneaded at the dissociation temperature of the blocked polyisocyanate compound or higher temperatures, the blocking agent contained in the blocked polyisocyanate compound is dissociated to produce highly reactive isocyanate groups, which promote the speed of the crosslinking reaction. In order to enhance the crosslinking reactivity, it is desirable to incorporate a catalyst.

Catalysts are preferably those usually employed for the production of polyurethane. Specific examples of the catalysts include:
(a) Alkylamines such as triethylamine, triethylenediamine, tetramethylbutanediamine and 1,4-diazabicyclo-[2,2,2]octane;
(b) Organic tins such as trimethyl tin hydroxide, tetra-n-butyl tin, dibutyl tin dilaurate and tin octoate; and
(c) Tin chlorides such as dimethyl tin dichloride, stannous chloride and stannic chloride. A mixture of two or more of these catalysts can also be used.

Further, there is a case where the dissociation temperature of the blocked polyisocyanate compound goes down when a catalyst is incorporated into the composition. Addition of a catalyst, therefore, makes it possible to control the dissociation temperature so that it is suitable to the molding conditions.

The amount of the catalyst incorporated is preferably 0.01 to 10 parts by weight per 100 parts by weight of the resin component. When the amount is less than 0.01 parts by weight, the effects of the catalyst are not obtained, whereas if it is in excess of 10 parts by weight, the processability of the resulting composition is lowered, and the excellent properties inherent in vinyl chloride resins are impaired.

It is also possible to incorporate a plasticizer into the vinyl chloride resin composition of the present invention. No particular limitations are imposed on the type of the plasticizer, and any known plasticizer can be used. Examples of the plasticizer include a phthalic acid plasticizer, a trimellitic acid plasticizer, an aliphatic monobasic ester plasticizer, an aliphatic dibasic ester plasticizer, an aromatic ester plasticizer, a hydroxy ester plasticizer, a phosphoric ester plasticizer and a polyester plasticizer. The amount of the plasticizer to be incorporated is preferably 200 parts by weight or less per 100 parts by weight of the resin component. When the amount is in excess of 200 parts by weight, the processability and productivity of the resulting composition are lowered.

It is also possible to incorporate a rubber-like material into the vinyl chloride resin composition of the present invention. There is no particular limitation on the type of the rubber-like material, and any known rubber-like material can be used. Examples of the rubber-like material include natural rubber, isoprene rubber, styrene-butadiene rubber, butadiene rubber, chloroprene rubber, acrylonitrilebutadiene rubber, butyl rubber, ethylene-propylene rubber, urethane rubber, silicone rubber, chlorosulfonated polyethylene, chlorinated polyethylene, acrylic rubber, epichlorohydrine rubber, fluorine rubber and rubber polysulfide. Any of non-crosslinked, partially crosslinked, and entirely crosslinked products of these rubber-like materials can be used singly or in combination of two or more.

The amount of the rubber-like material incorporated is preferably 10 to 200 parts by weight based on 100 parts by weight of the resin composition. When the amount is less than 10 parts by weight, the property of recovering from deformation cannot be sufficiently imparted to the resulting product; when the amount is in excess of 200 parts by weight, the processability of the resulting composition is lowered, the weathering resistance which is one of the excellent properties inherent in vinyl chloride resins and the surface smoothness of the resulting molded product are impaired, and the production cost is increased.

Additives which are used for ordinary vinyl chloride resins, such as a stabilizer, a processing aid, a lubricant, a filler and a pigment can also be added, if necessary, to the vinyl chloride resin composition of the present invention.

The vinyl chloride resin compositions of the present invention are produced by the following method:
1) A polyol compound and a blocked polyisocyanate compound, and, if necessary, a catalyst, a plasticizer, a stabilizer and other additives are added to and mixed with a resin component. The mixture is subjected to the drying up process, and then cooled to obtain a powdery vinyl chloride resin composition.
   An ordinary mixer such as a ribbon blender or a Henschel mixer may be used for the mixing of the above components. However, the drying up of the mixture should be conducted at a temperature lower than the dissociation temperature of the blocked polyisocyanate compound used.
2) The above-obtained composition is supplied to a granulator, and kneaded while heating, thereby obtaining a granular vinyl chloride resin composition which is excellent in handling properties.
   An ordinary granulator such as a mill roller, a Banbury mixer or an extrusion molding machine may be used for the granulation of the composition. The composition can be uniformly kneaded by using such an apparatus.
3) The composition obtained in the above procedure 1) or 2) is supplied to a roller molding machine, and kneaded while heating, thereby obtaining a sheet-shaped vinyl chloride resin composition.

When the composition is processed with the above-described granulator and molding machine, it is preferable to raise the temperature of the composition to the dissociation temperature of the blocked polyisocyanate compound or higher.

A molded product can be readily obtained by placing the vinyl chloride resin composition of the present invention in a molding machine which is usually used for extrusion molding, injection molding or roller molding, followed by melting and kneading. In order to thoroughly carry out the crosslinking reaction, it is necessary to raise the temperature of the resin composition to the dissociation temperature of the blocked polyisocyanate compound or a higher temperature when the composition is melted in a molding machine.

The present invention will now be explained more specifically by referring to the following Examples and Comparative Examples. However, the present invention is not limited to or limited by the examples. The products obtained in Examples and Comparative Examples were evaluated in accordance with the following methods.
(1) Compression set: Evaluated in accordance with JIS K-6301. Samples underwent a thermal treatment at 70°C and were compressed for 22 hours.
(2) Tensile strength: Evaluated in accordance with JIS K-6301, using a #3 dumbbell-shaped specimen.
(3) Appearance of pressed sheets: The surface smoothness of a pressed sheet obtained by using a press molding machine was visually evaluated.
   Evaluation standard:
   A: Excellent in surface smoothness
   B: Good in surface smoothness
   C: Poor in surface smoothness
(4) Appearance of extrusion-molded products: The surface smoothness of a belt-shaped molded product obtained by using a 40 mm single-screw extruder manufactured by The Japan Steel Works, Ltd. was visually evaluated.

Evaluation standard:
A: Excellent in surface smoothness
B: Good in surface smoothness
C: Poor in surface smoothness

### Example 1

98.0 wt% of a vinyl chloride monomer and 2.0 wt% of 2-hydroxyethyl acrylate were subjected to suspension polymerization at a temperature of 39°C, whereby a crosslinkable vinyl chloride resin containing 2.2 wt% of a reactive comonomer, having a mean polymerization degree of 2500 (hereinafter referred to as "crosslinkable PVC") was obtained.

Subsequently, 60 parts by weight of the crosslinkable PVC, 40 parts by weight of a vinyl chloride resin having a polymerization degree of 2500 ("Nipolit CL" (Trademark) manufactured by Chisso Corporation, hereinafter referred to as PVC), 12 parts by weight of a polyester polyol having a molecular weight of 3000 and a hydroxyl value of 36 KOHmg/g ("Kurapol P-3010" (Trademark) manufactured by Kuraray Co., Ltd., hereinafter referred to as a polyol compound), 7 parts by weight of a non-yellowing isocyanate prepolymer containing 12.5 wt% of NCO, having a dissociation temperature of 150°C ("Duranate TPA-B80E" (Trademark) manufactured by Asahi Chemical Industry Co., Ltd., hereinafter referred to as "crosslinking agent-1") as a blocked polyisocyanate compound, 10 parts by weight of powdery partially-crosslinked NBR (hereinafter referred to as NBR), 56 parts by weight of DOP, 1 part by weight of a Ba-Zn stabilizer, and 1 part by weight of a chelator were mixed in a beaker. The mixture was then melted and kneaded in a roller molding machine set to have a temperature of 170°C for 5 minutes (the maximum temperature of the resin: 173°C). Thus, a sheet-shaped vinyl chloride resin composition having a mean thickness of 1.2 mm was obtained.

The above-obtained composition was pressed by a press molding machine set to have a temperature of 180°C for 5 minutes, and then cooled, whereby a pressed sheet (150 mm x 150 mm x 2 mm) was obtained. This pressed sheet was subjected to the above-described evaluations. The results are shown in Table 1.

### Examples 2 to 4

A vinyl chloride resin composition was prepared by repeating the procedure of Example 1 except that 0.2 parts by weight (Example 2), 2 parts by weight (Example 3) or 5 parts by weight (Example 4) of dibutyl tin dilaurate (hereinafter referred to as a catalyst), a catalyst which does not affect the dissociation temperature of the blocked polyisocyanate compound, was added. A pressed sheet was obtained from the resin composition and evaluated in the same manner as in Example 1. The results are shown in Table 1.

### Example 5

A vinyl chloride resin composition was prepared by repeating the procedure of Example 1 except that 100 parts by weight of the crosslinkable PVC, 80 parts by weight of the polyol compound, 60 parts by weight of the crosslinking agent-1, 0.2 parts by weight of the catalyst, 1 part by weight of the Ba-Zn stabilizer and 1 part by weight of the chelator were used, and that the PVC, DOP and NBR used in Example 1 were not used. A pressed sheet was obtained from the resin composition and evaluated in the same manner as in Example 1. The results are shown in Table 1.

### Comparative Example 1

A non-crosslinked vinyl chloride resin composition was prepared by repeating the procedure of Example 1 except that 100 parts by weight of the PVC, 18 parts by weight of the NBR, 93 parts by weight of the DOP, 1 part by weight of the Ba-Zn stabilizer and 1 part by weight of the chelator were mixed in a beaker. A pressed sheet was obtained from the resin composition and evaluated in the same manner as in Example 1. The results are shown in Table 1.

### Comparative Example 2

A vinyl chloride resin composition was prepared by repeating the procedure of Example 1 except that the polyol compound used in Example 1 was not used, and that 0.2 parts by weight of the catalyst was used. A pressed sheet was obtained from the resin composition and evaluated in the same manner as in Example 1. The results are shown in Table 1.

### Example 6

A powdery mixture of 47 parts by weight of the crosslinkable PVC, 53 parts by weight of the PVC, 18 parts by weight of the NBR and 1 part by weight of the Ba-Zn stabilizer was charged in a 20-liter super mixer (manufactured by Kawata Kabushiki Kaisha), and heated by steam while stirring. When the temperature of the mixture reached 60°C, a liquid mixture of 10 parts by weight of the polyol compound, 7 parts by weight of the crosslinking agent-1, 0.2 parts by weight of the catalyst, 93 parts by weight of the DOP and 1 part by weight of the chelator was added. The resulting mixture was further heated. When the temperature of the mixture reached 120°C, the steam was replaced by cooling water to cool the mixture. The resulting powdery composition was supplied to an extruder in which the temperatures of the cylinders were set to have a temperature of 150°C, 160°C and 170°C (in the order from the hopper side) and that of the die to 170°C, and kneaded while heating (the maximum temperature of the resin: 175°C). Thus, a granular vinyl chloride resin composition was obtained.

A part of the above-obtained granular composition was melted and kneaded in a roller molding machine set to have a temperature of 170°C (the maximum temperature of the resin: 173°C) for 5 minutes, thereby obtaining a sheet-shaped vinyl chloride resin composition having a mean thickness of 1.2 mm. The sheet-shaped composition was pressed by a press molding machine set to have a temperature of 180°C for 5 minutes, and then cooled, whereby a pressed sheet (150 mm x 150 mm x 2 mm) was obtained. This pressed sheet was subjected to the above-described evaluations. The results are shown in Table 2.

The remaining granular composition was supplied to a single-screw extruder set to have a temperature of 160 to 180°C (the maximum temperature of the resin: 185°C) to conduct belt extrusion molding. The resulting belt-shaped molded product was subjected to the above-described evaluations. The results are shown in Table 2.

### Example 7

A vinyl chloride resin composition was prepared by repeating the procedure of Example 6 except that the NBR used in Example 6 was not used. A pressed sheet and a belt-shaped molded product were obtained from the resin composition and evaluated in the same manner as in Example 6. The results are shown in Table 2.

### Example 8

A vinyl chloride resin composition was prepared by repeating the procedure of Example 6 except that 100 parts by weight of the NBR was used. A pressed sheet and a belt-shaped molded product were obtained from the resin composition and evaluated in the same manner as in Example 6. The results are shown in Table 2.

### Comparative Example 3

A vinyl chloride resin composition was prepared by repeating the procedure of Example 6 except that 7 parts by weight of non-yellowing isocyanate prepolymer containing 6.0 wt% of NCO ("Burnock DN-955" (Trademark) manufactured by Dainippon Ink & Chemical, Inc., hereinafter referred to as "crosslinking agent-2"), a non-blocked polyisocyanate compound, was used instead of the crosslinking agent-1, and that the catalyst used in Example 6 was not used. A pressed sheet and a belt-shaped molded product were obtained from the resin composition and evaluated in the same manner as in Example 6. The results are shown in Table 2.

**Table 1**

| | Example | | | | Comp. Ex. | | |
|---|---|---|---|---|---|---|---|
| | 1 | 2 | 3 | 4 | 5 | 1 | 2 |
| **Formulation (parts by weight)** | | | | | | | |
| PVC | 40 | 40 | 40 | 40 | - | 100 | 40 |
| Crosslinkable PVC | 60 | 60 | 60 | 60 | 100 | - | 60 |
| Polyol compound | 12 | 12 | 12 | 12 | 80 | - | - |
| Crosslinking agent-1 | 7 | 7 | 7 | 7 | 60 | - | 7 |
| Crosslinking agent-2 | - | - | - | - | - | - | - |
| Catalyst | - | 0.2 | 2 | 5 | 0.2 | - | 0.2 |
| DOP | 56 | 56 | 56 | 56 | - | 93 | 56 |
| NBR | 10 | 10 | 10 | 10 | - | 18 | 10 |
| Ba-Zn stabilizer | 1 | 1 | 1 | 1 | 1 | 1 | 1 |
| Chelator | 1 | 1 | 1 | 1 | 1 | 1 | 1 |
| Compression set (%) | 46 | 38 | 37 | 37 | 32 | 55 | 53 |
| Tensile strenght(kg/cm²) | 170 | 170 | 170 | 170 | 190 | 140 | 150 |
| Appearance of pressed sheet | B | B | B | B | B | A | B |

**Table 2**

| | Example | | | Comp. Ex. |
|---|---|---|---|---|
| | 6 | 7 | 8 | 3 |
| **Formulation (parts by weight)** | | | | |
| PVC | 53 | 53 | 53 | 53 |
| Crosslinkable PVC | 47 | 47 | 47 | 47 |
| Polyol compound | 10 | 10 | 10 | 10 |
| Crosslinking agent-1 | 7 | 7 | 7 | - |
| Crosslinking agent-2 | - | - | - | 7 |
| Catalyst | 0.2 | 0.2 | 0.2 | - |
| DOP | 93 | 93 | 93 | 93 |
| NBR | 18 | - | 100 | 18 |
| Ba-Zn stabilizer | 1 | 1 | 1 | 1 |
| Chelator | 1 | 1 | 1 | 1 |
| Compression set (%) | 39 | 45 | 29 | 51 |
| Tensile strenght(kg/cm²) | 160 | 170 | 150 | 160 |
| Appearance of pressed sheet | A | A | A | C |
| Appearance of emulsion-molded product | A | A | A | C |

The results shown in Tables 1 and 2 clearly demonstrate that the products of Examples 1 to 8 have extremely small values of compression set and are excellent in shape retentivity (the property of recovering from deformation) as compared with the products of Comparative Examples 1 to 3.

Moreover, the values of the tensile strength of the molded products of the present invention (Examples 1 to 5) are higher than that of the non-crosslinked molded product (Comparative Example 1) and that of the molded product incorporated with no polyol compound (Comparative Example 2). It can thus be known that the molded products of the present invention are excellent in strength.

Furthermore, it was also found that the molded products of the present invention (Examples 6 to 8) were excellent in appearance (free from melt instability and excellent in surface smoothness) as compared with the molded product incorporated with the non-blocked isocyanate prepolymer (Comparative Example 3).

The molded products obtained from the compositions of the present invention are, as mentioned above, excellent in both compression set and tensile strength. Therefore, they can be advantageously used in industrial (e.g. for automobiles, machines, electric appliances), medical and architectural applications.

## Claims

1. A vinyl chloride resin composition comprising:
(a) 100 parts by weight of a crosslinkable vinyl chloride resin, or 100 parts by weight in total of 1 to 99 parts by weight of a crosslinkable vinyl chloride resin and 99 to 1 part by weight of a vinyl chloride resin;
(b) 1 to 100 parts by weight of a polyol compound; and
(c) as a crosslinking agent, 1 to 100 parts by weight of a blocked polyisocyanate compound.

2. A composition according to claim 1 wherein the crosslinkable vinyl chloride resin is a copolymer of 99.98 to 50 mol% of a vinyl chloride monomer and 0.02 to 50 mol% of an unsaturated monomer having active hydrogen, and has a mean polymerization degree of 300 to 5000.

3. A composition according to claim 1 or 2, further comprising, as a catalyst, 0.01 to 10 parts by weight of one or more of alkylamines, organic tin compounds and tin chlorides.

4. The vinyl chloride resin composition according to any one of the preceding claims further comprising 10 to 200 parts by weight of a rubber-like material.

5. A method of producing the vinyl chloride resin composition as claimed in claim 1, comprising a drying-up step in which the components are mixed while heating them to a temperature lower than the dissociation temperature of the blocked polyisocyanate compound.

6. A method according to claim 5, further comprising a step of kneading the mixture while heating it to the dissociation temperature of the blocked polyisocyanate compound or higher.

7. A molded product obtained from the vinyl chloride resin composition prepared by the method as claimed in claim 5.

8. A method of producing the molded product set forth in claim 7, comprising a step of molding the vinyl chloride resin composition while heating it to the dissociation temperature of the blocked polyisocyanate compound or higher.
